# EUROPEAN PATENT APPLICATION

(11) **EP 3 533 685 A1**
(43) Date of publication of application: **04.09.2019**
(21) Application number: 19159372.2
(22) Date of filing: 26.02.2019
(51) Int. Cl.: B62B 5/00, B62B 3/14

(54) **HANDCART**

(30) Priority: 02.03.2018 JP 2018037803
(71) Applicant: Toshiba Tec Kabushiki Kaisha, 141-8562 Tokyo (JP)
(72) Inventor: Naito, Hidehiro, Tokyo, 141-8562 (JP); Iizaka, Hitoshi, Tokyo, 141-8562 (JP); Saitou, Takahiro, Tokyo, 141-8562 (JP); Yokoyama, Yukiko, Tokyo, 141-8562 (JP); Kurata, Masachika, Tokyo, 141-8562 (JP); Hara, Noriyoshi, Tokyo, 141-8562 (JP)
(74) Representative: Hoffmann Eitle

(57) **Abstract**

A handcart (10) includes a cart frame, a code reader holder (130), and a code reader (120, 140). The cart frame includes a receiving portion (50) on which a shopping basket (P) is placeable. The code reader holder is attached to the cart frame and including an insertion opening (132b) that is movable to a position at which the insertion opening faces upward. The code reader includes an insertion portion (144), and detachably attached to the code reader holder when the insertion portion is inserted into the insertion opening of the code reader.

## Description

### CROSS-REFERENCE TO RELATED APPLICATION

This application is based upon and claims the benefit of priority from Japanese Patent Application No. 2018-037803, filed in March 2, 2018, the entire contents of which are incorporated herein by reference.

### FIELD

An embodiment described herein relates generally to a handcart.

### BACKGROUND

A customer uses a shopping cart in a store such as a supermarket or a shopping mall. A shopping cart of one type has a scanner attached to the shopping cart, and the scanner reads commodity codes attached to commodities. By using the scanner attached to the shopping cart, the customer can read the commodity codes attached to the commodities.

However, an optimum direction of the scanner in reading the commodity codes may be different depending on a customer preference. Therefore, a specific direction, if set by the store, may not be optimum.

Therefore, it is desirable to provide a shopping cart including a scanner with improved customer usability.

### SUMMARY OF THE INVENTION

One of the objects of the present invention is to improve prior art techniques and overcome at least some of the prior art problems as for instance above illustrated.

According to a first aspect of the present invention, it is provided a handcart comprising a cart frame including a receiving portion on which a shopping basket is placeable; a code reader holder attached to the cart frame and including an insertion opening that is movable to a position at which the insertion opening faces upward; and a code reader including an insertion portion, and detachably attached to the code reader holder when the insertion portion is inserted into the insertion opening of the code reader.

Optionally, in the handcart according to the first aspect of the invention, the insertion portion of the code reader includes a magnetic material, and the code reader holder includes a magnetic material that restricts movement of the code reader when the insertion portion is inserted into the insertion opening of the code reader holder.

Optionally, in the handcart according to the first aspect of the invention, the magnetic material of the code reader holder restricts movement of the code reader in an insertion direction of the insertion portion.

Optionally, in the handcart according to the first aspect of the invention, the magnetic material of the code reader holder restricts rotation of the code reader about an insertion direction of the insertion portion.

Optionally, in the handcart according to the first aspect of the invention, the cart frame further includes a lateral portion extending in a width direction of the cart frame, and the code reader holder is attached to the lateral portion of the cart frame and rotatable around the lateral portion.

Optionally, in the handcart according to the first aspect of the invention, the code reader is rotatable around the lateral portion of the cart frame to a first position at which a reading window of the code reader inserted into the insertion portion of the code reader holder faces an inner space of the shopping basket on the receiving portion of the cart frame, and to a second position at which the reading window of the code reader inserted into the insertion portion of the code reader holder faces a front of the cart frame.

Optionally, in the handcart according to the first aspect of the invention, the lateral portion of the cart frame is a handle portion disposed at a rear region of the cart frame.

Optionally, in the handcart according to the first aspect of the invention, the code reader is attached to a center of the lateral portion in a width direction of the cart frame.

Optionally, in the handcart according to the first aspect of the invention, the insertion opening of the code reader holder and the insertion portion of the code reader are configured, such that the insertion portion is insertable at a first angle at which a reading window of the code reader faces a front of the cart frame, and at a second angle at which the reading window of the code reader faces a side of the cart frame.

Optionally, in the handcart according to the first aspect of the invention, the code reader is connected to the cart frame via a curled cord having a length that does not cause the code reader to reach ground when the code reader is hanging from the cart frame.

Optionally, in the handcart according to the first aspect of the invention, the code reader is configured to operate in a first mode during which the code reader carries out code reading in response to an operation of a scanner trigger, and in a second mode during which the code reader carries out code reading without the operation of the scanner trigger.

Optionally, in the handcart according to the first aspect of the invention, the code reader is configured to obtain a scanned image including a code symbol on a product, and the handcart further comprises a display device configured to display information corresponding to the obtained scanned image.

Optionally, the handcart according to the first aspect of the invention further comprises a camera positioned to capture an image of a region including an inner space of the shopping basket.

Optionally, the handcart according to the first aspect of the invention further comprises a battery coupled to a portion of the cart frame below the lateral portion, the battery being electrically connected to the code scanner to supply power thereto.

According to a second aspect of the invention, it is provided a handcart comprising a cart frame including a receiving portion on which a shopping basket is placeable; a code reader holder attached to the cart frame and including an insertion opening that is movable to a position at which the insertion opening faces upward; and a code reader including an insertion portion that is configured to be inserted into the insertion opening, wherein when the insertion portion is inserted into the insertion opening, the insertion portion are held within the insertion opening by magnetic forces.

Optionally, in the handcart according to the second aspect of the invention, the magnetic forces restrict movement of the code reader in an insertion direction of the insertion portion.

Optionally, in the handcart according to the second aspect of the invention, the magnetic forces restrict rotation of the code reader about an insertion direction of the insertion portion.

Optionally, in the handcart according to the second aspect of the invention, the cart frame further includes a lateral portion extending in a width direction of the cart frame, and the code reader holder is attached to the lateral portion of the cart frame and rotatable around the lateral portion.

Optionally, in the handcart according to the second aspect of the invention, the lateral portion of the cart frame is a handle portion disposed at a rear region of the cart frame, and the code reader is attached to a center of the lateral portion in a width direction of the cart frame.

Optionally, in the handcart according to the second aspect of the invention, the insertion opening of the code reader holder and the insertion portion of the code reader are configured, such that the insertion portion is insertable at a first angle at which a reading window of the code reader faces a front of the cart frame, and at a second angle at which the reading window of the code reader faces a side of the cart frame.

### DESCRIPTION OF THE DRAWINGS

FIG. 1 illustrates an exterior perspective view of a shopping cart according to an embodiment.
FIG. 2 illustrates a perspective view of a scanner attached to the shopping cart.
FIG. 3 illustrates a side view of the scanner attached to the shopping cart.
FIG. 4 is a block diagram illustrating functional elements of a control section of the shopping cart.
FIG. 5 illustrates another perspective view of the scanner attached to the shopping cart.
FIG. 6 illustrates a perspective view of the scanner to explain a method of using the scanner.

### DETAILED DESCRIPTION

An embodiment is directed to providing a handcart in which a commodity-code reading device that reads a commodity code for specifying a commodity is formed in a user-friendly structure.

In general, according an embodiment, a handcart includes a cart frame, a code reader holder, and a code reader. The cart frame includes a receiving portion on which a shopping basket is placeable. The code reader holder is attached to the cart frame and including an insertion opening that is movable to a position at which the insertion opening faces upward. The code reader includes an insertion portion, and detachably attached to the code reader holder when the insertion portion is inserted into the insertion opening of the code reader.

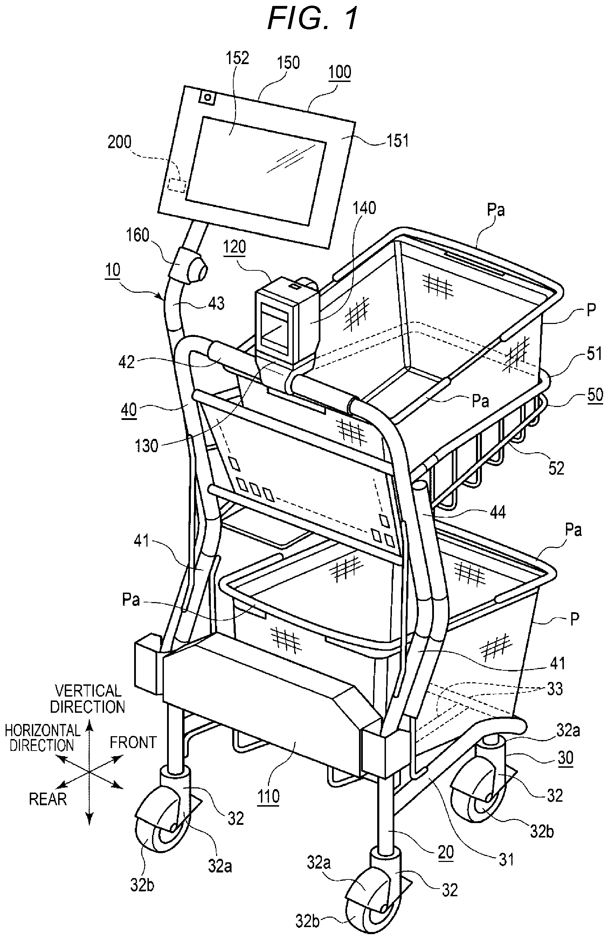

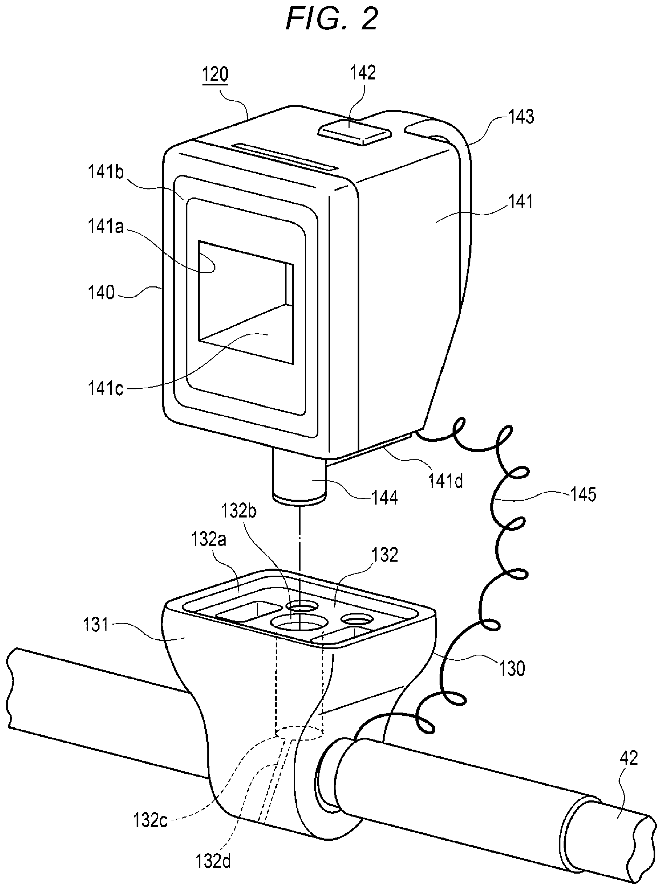

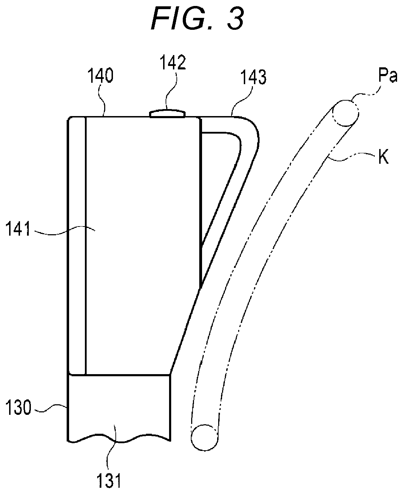

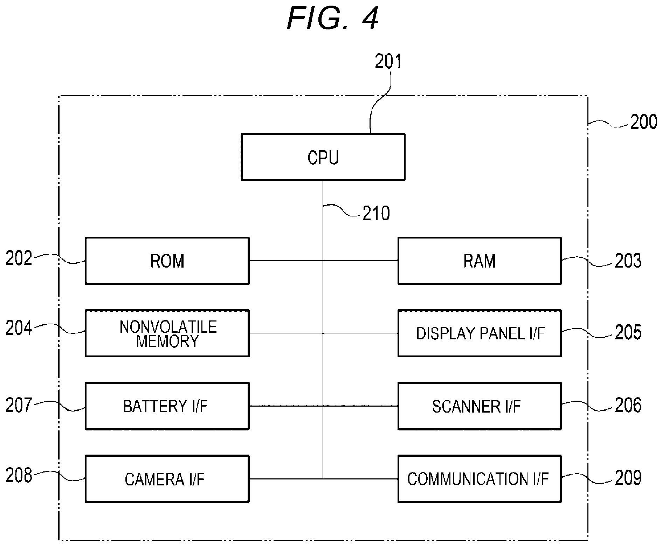

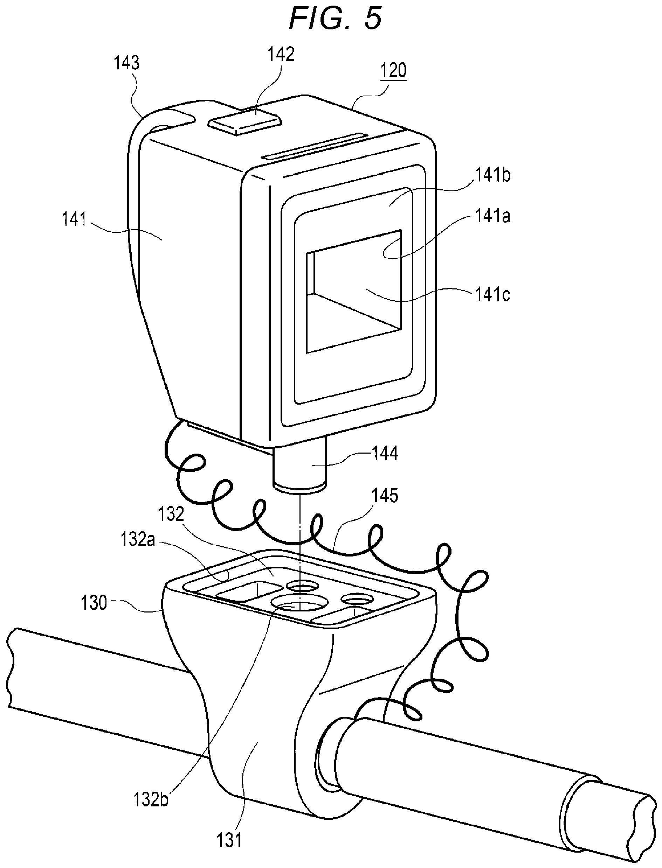

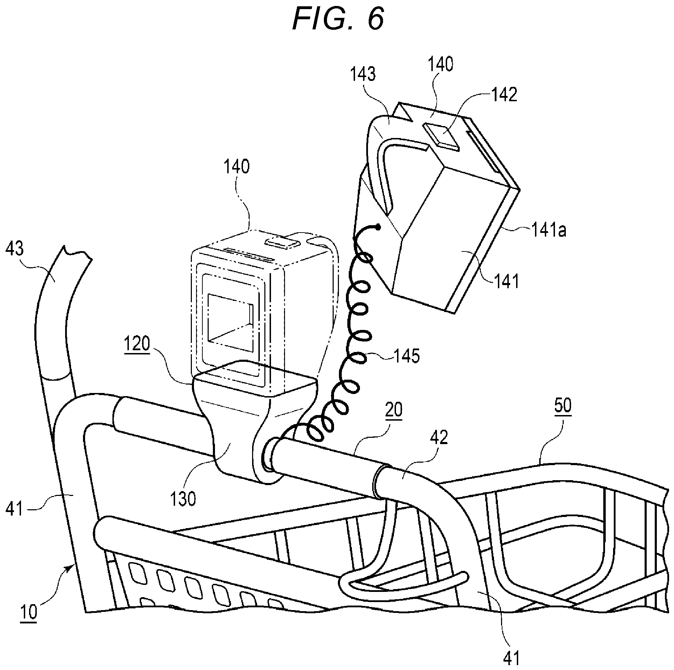

An embodiment is described below with reference to the drawings . A shopping cart used in a store such as a supermarket is described as an example of a handcart. FIG. 1 illustrates an exterior perspective view of a shopping cart 10. FIG. 2 illustrates a perspective view of a scanner 140 attached to the shopping cart 10. FIG. 3 illustrates a side view of the scanner 140 attached to the shopping cart 10. FIG. 4 is a block diagram illustrating functional elements of a control section 200 of the shopping cart 10. FIG. 5 illustrates a perspective view of the scanner 140 attached to the shopping cart 10. FIG. 6 illustrates a perspective view of the scanner 140 to explain a method of using the scanner 140 attached to the shopping cart 10.

Although not illustrated in FIG. 1, the shopping cart 10 functions as a register that reads a commodity code of a commodity that a customer desires to purchase. A list of read commodities is transferred to a checkout machine, which is a separate apparatus. The customer performs payment using the checkout machine.

As illustrated in FIG. 1, the shopping cart 10 according to this embodiment includes a cart section 20 that carries a shopping basket P that stores commodities and an electrical section 100 attached to the cart section 20. The cart section 20 includes a caster section 30 for smoothly moving the shopping cart 10 on the floor surface, a handle frame section 40 vertically provided on a rear wheel side of the caster section 30, and a basket receiving section 50 attached to an intermediate position in the height direction of the handle frame section 40 to be directed forward. The shopping basket P can be placed on the caster section 30 and the basket receiving section 50 as appropriate. The shopping basket P includes a handle Pa that swings.

The caster section 30 includes a frame 31 having a square frame shape, the rear side of which is open, and casters 32 respectively provided at four corners of the frame 31. The casters 32 include brackets 32a that freely rotate around axes in the vertical direction and include, in the brackets 32a, wheels 32b that are made of rubber or resin and freely rotate in the horizontal direction. A receiving section 33 is provided in the frame 31. The receiving section 33 is formed in dimensions for allowing a lower part of the shopping basket P to fit in the receiving section 33.

The handle frame section 40 includes vertical frames 41 respectively attached to left and right rear wheel sides of the caster section 30 and a handlebar 42 in the horizontal direction that connects the upper ends of the vertical frames 41. An extended arm 43 is attached to the vertical frame 41 on the left side. A reinforcing material 44 is attached to the handle frame section 40.

The basket receiving section 50 includes a frame 51 having a square frame shape and a receiving section 52 provided on the lower side of the frame 51. The receiving section 52 is formed in dimensions for allowing the lower part of the shopping basket P to fit in the receiving section 52.

The electrical section 100 is provided above the caster section 30. A battery section 110 is attached between the vertical frames 41 on the lower end side of the handle frame section 40, and a scanner device 120 for reading a commodity code is provided. The electrical section 100 includes a display 150 that displays various kinds of information such as a commodity name and a unit price of a commodity read by a scanner 140 described below and a camera 160 that images the inside of the shopping basket P and the like. The battery section 110 supplies electric power to the scanner device 120, the display 150, and the camera 160 via a power line in the handle frame section 40. The scanner device 120, the display 150, and the camera 160 are connected to one another by cables in the handle frame section 40 and the extended arm 43. The display 150 is attached to the upper end of the extended arm 43. The camera 160 is attached to a halfway part of the extended arm 43. The shopping cart 10 functioning as a register that reads a commodity code of a commodity that a customer desires to purchase is configured by these components.

As illustrated in FIG. 2, the scanner device 120 includes a scanner holder (a reading device holder) 130 attached to the handlebar 42 and a scanner (a commodity-code reading device) 140 detachably attached to the scanner holder 130 and configured to read a commodity code for specifying a commodity.

The scanner holder 130 includes a holder housing 131 in a lower part fastened to the handlebar 42 and a concave connecting section 132 provided in an upper part of the holder housing 131. The connecting section 132 includes a square opening section 132a. A round hole-like insertion section 132b into which an inserting section 144 described below is inserted is provided on the inner side of the opening section 132a. A permanent magnet (a retaining mechanism) 132c is set at the bottom of the insertion section 132b. The permanent magnet 132c has a function of generating a retaining force in an axial direction and a circumferential direction with a magnetic force when the inserting section 144 is inserted. The retaining force is set to a level for allowing the customer to easily remove the scanner 140. A drain hole 132d is formed at the bottom of the insertion section 132b. The drain hole 132d can discharge water accumulated on the inside of the insertion section 132b.

The scanner 140 includes a substantially rectangular parallelepiped scanner body 141. An opening section 141a is provided on the front surface of the scanner body 141 and closed by a glass plate 141b. A reading section 141c is provided in the opening section 141a.

A scanner trigger 142 for starting a scanner operation with the reading section 141c is provided on the upper surface of the scanner body 141. A handle 143 is provided on the rear surface of the scanner body 141.

As illustrated in FIG. 3, the rear surface side of the scanner body 141 and the handle 143 are inclined downward in order to avoid interference with a grip Pa of a shopping basket P. K in FIG. 3 denotes a trajectory of the grip Pa.

A bottom surface 141d of the scanner body 141 is formed in a square shape. The bottom surface 141d fits with the inner wall of the opening section 132a. A round bar-like inserting section 144 is formed in the center of the bottom surface 141d. At least the distal end of the inserting section 144 is formed of a magnetic body. The opening section 132a and the bottom surface 141d can be inserted and fixed in all of four directions in total such as a front direction illustrated in FIG. 2 and a lateral direction illustrated in FIG. 5 by changing a direction in which the opening section 132a and the bottom surface 141d are fit. Therefore, a position in the circumferential direction of the scanner 140 is fixed. The shape of the opening section 132a and the bottom surface 141d is not limited the square and may be other polygons and a circle . An inserting direction can be changed according to the shape.

One end of a curled cord 145 to prevent carry-out by the user is connected to the reading section 141c on the inside of the scanner 140. The other end of the curled cord 145 is connected to the scanner holder 130. The length of the curled cord 145 is set to a length for preventing the scanner 140 from reaching the floor surface when the scanner 140 is suspended by own weight when the customer drops the scanner 140. The customer can extend the curled cord 145 according to necessity. The length of the curled cord 145 is set to a length for allowing the curled cord 145 to reach near the bottom surface of the shopping basket P placed on the most distant caster section 30 when the curled cord 145 is extended to the maximum.

The scanner 140 reads commodity codes attached to commodities displayed in a store. The commodity codes are associated with the commodities.

The display 150 includes a display panel 152 having a touch panel function. The display panel 152 is provided on the front surface of a terminal housing 151. A control section 200 that controls the battery section 110, the scanner device 120, the display 150, and the camera 160 is provided on the inside of the terminal housing 151.

As illustrated in FIG. 4, in the control section 200, a ROM (Read Only Memory) 202 that stores data in a non-rewritable manner, a RAM (Random Access Memory) 203 that stores variable data in a rewritable manner and functions as a work area or the like of a CPU (Central processing Unit) 201, and a nonvolatile memory 204 are connected to, via a bus line 210, the CPU 201 that centrally controls the sections. In the RAM 203, a storage region for storing a commodity master downloaded from a host server and a shopping list created on the basis of a commodity code read by the customer and the commodity master are provided. Computer programs executed by the CPU 201 are stored in the nonvolatile memory 204. Further, an interface 205 with the display panel 152, an interface 206 with the scanner 140, an interface 207 with the battery section 110, and an interface 208 with the camera 160 are connected to the CPU 201 via the bus line 210. The CPU 201 is connected to a communication interface 209 via the bus line 210. The CPU 201 performs communication with the checkout machine, the host server, and the like via the communication interface 209.

The shopping cart 10 configured in this way is used as described below. That is, the customer performs shopping as described below. In the beginning, the shopping cart 10 is placed in an entrance or the like of the store. At this time, the scanner 140 is inserted into the scanner holder 130 with the opening section 141a of the scanner 140 directed to any one direction of the front, the rear, the left, and the right.

Subsequently, the customer pulls out the shopping cart 10 that the customer uses. The customer inserts the scanner 140 in a desired direction of the customer (e.g., a direction illustrated in FIG. 5) again. The customer takes the shopping basket P and places the shopping basket P on at least one of the caster section 30 and the basket receiving section 50. It is assumed that the customer places the shopping baskets P respectively on the caster section 30 and the basket receiving section 50. The customer moves the shopping cart 10 toward a commodity shelf on which commodities are displayed while pushing the handlebar 42.

The customer takes out a target commodity from the commodity shelf, brings a commodity code of the commodity close to the opening section 141a of the scanner 140 while keeping the scanner 140 inserted into the scanner holder 130, and presses the scanner trigger 142. Consequently, the commodity code is read by the scanner 140. Read information is sent to the control section 200, saved in the RAM 203, and displayed on the display panel 152 as a commodity name and an amount. The customer puts the commodity in the shopping basket P placed on the caster section 30 or the basket receiving section 50.

On the other hand, for a heavy commodity (e.g., a beverage or rice), the customer takes out the commodity from the commodity shelf and directly puts the commodity in the shopping basket P on the basket receiving section 50. As illustrated in FIG. 6, the customer takes out the scanner 140 from the scanner holder 130, holds the handle 143 and directs the reading section 141c to a commodity code of the commodity, and presses the scanner trigger 142. Consequently, a commodity code reading operation is performed. Processing by the control section 200 is performed on the read commodity code in the same manner as described above. The scanner 140 can be surely held by the handle 143. Therefore, it is possible to reduce a risk that the customer drops the scanner 140.

For a commodity (e.g., a daily dish or sashimi) undesirable to be tilted at a fixed angle or more, the customer takes out the commodity from the commodity shelf without tilting the commodity. The customer takes out the scanner 140 from the scanner holder 130, holds the handle 143 and directs the reading section 141c to a commodity code of the commodity, and presses the scanner trigger 142. Consequently, the commodity code reading operation is performed. The processing by the control section 200 is performed on the read commodity code in the same manner as described above.

In this way, the customer can fix the direction of the scanner 140 according to a preference of the customer. Usability of the scanner 140 can be improved when the customer scans a commodity. If the scanner 140 is inserted into the scanner holder 130, the insertion section 132b and the inserting section 144 are held by a magnetic force. Therefore, the scanner 140 does not drop because of vibration, a tilt, or the like during the movement of the shopping cart 10.

Concerning the heavy commodity such as rice or the commodity undesirable to be tilted, such as dairy dish, it is possible to cause the scanner 140 to appropriately read the commodity code by detaching the scanner 140 to bring the scanner 140 close the commodity or tilting the scanner 140 itself.

An advantage described below is obtained by using the curled cord 145. A cable for preventing the scanner 140 from being carried out is necessary. The cable is desired to be long to a certain extent in order to make it easy to read a commodity code. However, an excessively long cable is undesirable because the cable is dragged on the floor surface. If a housing section and a winding device for the cable are manufactured, usability of the scanner may be deteriorated.

On the other hand, if the scanner is detached and used, a grip for holding the scanner needs to be formed on a scanner side surface. However, there is a risk that the customer drops and breaks the scanner by mistake. Since the curled cord 145 is used as the cable, even if a commodity is placed in a far place in the shopping basket P, the commodity can be scanned by the scanner 140. The curled cord 145 is set shorter than length with which the scanner 140 reaches the floor surface when the scanner 140 is suspended from the handlebar 42 by own weight. Even if the customer drops the scanner 140, the scanner 140 is not broken.

If the customer finishes purchasing all commodities that the customer desires to purchase, the customer moves to the checkout machine. For example, the customer operates the display panel 152 of the display 150 to transmit the shopping list stored in the RAM 203 to the checkout machine. The customer performs payment using the checkout machine. After finishing the payment, the customer returns the shopping cart 10 to a predetermined position of the store.

In the embodiment, the holding directions of the scanner 140 in the scanner holder 130 are the four directions. However, the holding directions are not limited to the four directions. The scanner 140 may be freely directed to 360° depending on the shapes of the scanner 140 and the scanner holder 130.

While a certain embodiment is explained above, the embodiment is presented as an example and is not intended to limit the scope of the invention. The new embodiment can be implemented in other various forms. Various omissions, substitutions, and changes can be performed without departing from the scope of the invention as defined by the appended claims. The embodiment and modifications of the embodiment are included in the scope of the invention and included in the inventions described in claims and the scope of equivalents of the inventions.

## Claims

1. A handcart comprising:
a cart frame including a receiving portion on which a shopping basket is placeable;
a code reader holder attached to the cart frame and including an insertion opening that is movable to a position at which the insertion opening faces upward; and
a code reader including an insertion portion, and detachably attached to the code reader holder when the insertion portion is inserted into the insertion opening of the code reader.

2. The handcart according to claim 1, wherein
the insertion portion of the code reader includes a magnetic material, and
the code reader holder includes a magnetic material that restricts movement of the code reader when the insertion portion is inserted into the insertion opening of the code reader holder

3. The handcart according to claim 1 or 2, wherein
a magnetic material of the code reader holder restricts movement of the code reader in an insertion direction of the insertion portion and/or
a magnetic material of the code reader holder restricts rotation of the code reader about an insertion direction of the insertion portion.

4. The handcart according to any of claims 1 to 3, wherein
the cart frame further includes a lateral portion extending in a width direction of the cart frame, and
the code reader holder is attached to the lateral portion of the cart frame and rotatable around the lateral portion.

5. The handcart according to claim 4, wherein the code reader is rotatable around the lateral portion of the cart frame to a first position at which a reading window of the code reader inserted into the insertion portion of the code reader holder faces an inner space of the shopping basket on the receiving portion of the cart frame, and to a second position at which the reading window of the code reader inserted into the insertion portion of the code reader holder faces a front of the cart frame.

6. The handcart according to claim 4 or 5, wherein the lateral portion of the cart frame is a handle portion disposed at a rear region of the cart frame.

7. The handcart according to any of claims 4 to 6, wherein the code reader is attached to a center of the lateral portion in a width direction of the cart frame.

8. The handcart according to any of claims 1 to 7, wherein
the insertion opening of the code reader holder and the insertion portion of the code reader are configured, such that the insertion portion is insertable at a first angle at which a reading window of the code reader faces a front of the cart frame, and at a second angle at which the reading window of the code reader faces a side of the cart frame.

9. The handcart according to any of claims 1 to 8, wherein
the code reader is connected to the cart frame via a curled cord having a length that does not cause the code reader to reach ground when the code reader is hanging from the cart frame.

10. The handcart according to any of claims 1 to 9, wherein the code reader is configured to operate in a first mode during which the code reader carries out code reading in response to an operation of a scanner trigger, and in a second mode during which the code reader carries out code reading without the operation of the scanner trigger.

11. The handcart according to any of claims 1 to 10, wherein
the code reader is configured to obtain a scanned image including a code symbol on a product, and
the handcart further comprises a display device configured to display information corresponding to the obtained scanned image.

12. The handcart according to any of claims 1 to 11, further comprising:
a camera positioned to capture an image of a region including an inner space of the shopping basket.

13. The handcart according to any of claims 1 to 12, further comprising:
a battery coupled to a portion of the cart frame below the lateral portion, the battery being electrically connected to the code scanner to supply power thereto.

14. A handcart comprising:
a cart frame including a receiving portion on which a shopping basket is placeable;
a code reader holder attached to the cart frame and including an insertion opening that is movable to a position at which the insertion opening faces upward; and
a code reader including an insertion portion that is configured to be inserted into the insertion opening, wherein
when the insertion portion is inserted into the insertion opening, the insertion portion are held within the insertion opening by magnetic forces.

15. The handcart according to claim 14, wherein the magnetic forces restrict movement of the code reader in an insertion direction of the insertion portion and/or the magnetic forces restrict rotation of the code reader about an insertion direction of the insertion portion.
